# EUROPEAN PATENT APPLICATION

(11) **EP 4 546 462 A1**
(43) Date of publication of application: **30.04.2025**
(21) Application number: 22948451.4
(22) Date of filing: 30.06.2022
(51) Int. Cl.: H01M 4/505, H01M 4/525, H01M 10/05

(54) **ELECTROCHEMICAL DEVICE AND ELECTRONIC DEVICE**

(71) Applicant: Ningde Amperex Technology Limited, Ningde, Fujian 352100 (CN)
(72) Inventor: YUAN, Guoxia, Ningde, Fujian 352100 (CN); LANG, Ye, Ningde, Fujian 352100 (CN); XU, Leimin, Ningde, Fujian 352100 (CN)
(74) Representative: Icosa
(86) International application number: PCT/CN2022/102578
(87) International publication number: WO 2024/000337

(57) **Abstract**

This application provides an electrochemical device and an electronic device. The electrochemical device includes a positive electrode, a negative electrode, and an electrolyte. The positive electrode includes a positive active material layer. The positive active material layer includes a first powder and a second powder. After the electrochemical device is fully discharged, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°. The electrochemical device disclosed herein achieves a high specific discharge capacity and a long cycle life concurrently.

## Description

### TECHNICAL FIELD

This application relates to the field of electrochemical technology, and in particular, to an electrochemical device and an electronic device.

### BACKGROUND

By virtue of a high operating voltage, a long cycle life, environment-friendliness, a light weight, and other advantages, electrochemical devices such as a lithium-ion battery are widely used everywhere in modern life. In recent years, lithium-ion batteries have been developing rapidly in the fields of new energy vehicles and large-scale energy storage. With the increasing popularization of new energy vehicles, the demand for a longer driving range imposes higher requirements on the energy density, cycle performance, and other performance metrics of batteries. For example, in a lithium-ion battery currently available, materials such as lithium iron phosphate are widely used as positive electrode materials due to excellent cycle performance and safety performance. However, compared with a nickel-cobalt-manganese ternary material, the materials such as lithium iron phosphate possess a much lower energy density, thereby resulting in a decrease in the driving range of new energy vehicles. Therefore, a positive active material that improves the energy density and cycle performance of batteries still needs to be developed.

### SUMMARY

An objective of this application is to provide an electrochemical device and an electronic device to increase the specific discharge capacity of the electrochemical device, endow the electrochemical device with a relatively high energy density, and improve the cycle performance of the electrochemical device.

A first aspect of this application provides an electrochemical device. The electrochemical device includes a positive electrode, a negative electrode, and an electrolyte. The positive electrode includes a positive active material layer. The positive active material layer includes a first powder and a second powder. After the electrochemical device is fully discharged, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°. The first powder includes iron, and the second powder includes manganese. The first diffraction peak is a diffraction peak corresponding to the second powder, and the second diffraction peak is a diffraction peak corresponding to the first powder. The second powder with the first diffraction peak can provide a relatively high gravimetric capacity, and the first powder with the second diffraction peak can provide good structural stability and charge-discharge reversibility. The two types of powders can exert a good synergistic effect in the positive active material layer. In this way, the positive active material layer is endowed with a high gravimetric capacity, high structural stability, and high charge-discharge reversibility, thereby improving the specific discharge capacity and energy density of the electrochemical device and enhancing the cycle performance of the electrochemical device.

In any embodiment of this application, a peak intensity I_{A} of the first diffraction peak and a peak intensity I_{B} of the second diffraction peak satisfy: 0 < I_{A}/I_{B} ≤ 0.3, and preferably 0.05 ≤ I_{A}/I_{B} ≤ 0.25. When the peak intensity I_{A} of the first diffraction peak and the peak intensity I_{B} of the second diffraction peak satisfy the above relation, it means that the structure and content of the second powder as well as the structure and content of the first powder satisfy a specified relationship. In this case, the second powder works more synergistically with the first powder to ensure sufficient ion transfer inside the electrochemical device and improve the electrical performance, thereby effectively improving the specific discharge capacity and cycle performance of the electrochemical device, and endowing the electrochemical device with a relatively high energy density.

In any embodiment of this application, based on a mass of the positive active material layer, a mass percentage ω_{Mn} of manganese and a mass percentage ω_{Fe} of iron satisfy: 0.01% ≤ ω_{Mn}/ω_{Fe} ≤ 30%, and preferably 0.05% ≤ ω_{Mn}/ω_{Fe} ≤ 25%. When the mass percentage ω_{Mn} of manganese is higher, it indicates that the mass percentage of the second powder in the positive active material is relatively high, so that the electrochemical device achieves a relatively high specific discharge capacity due to the relatively high gravimetric capacity of the second powder. When falling within the above range, the ω_{Mn}/ω_{Fe} ratio can effectively improve the cycle performance of the electrochemical device, increase the specific discharge capacity, and endow the electrochemical device with a relatively high energy density.

In any embodiment of this application, the second powder has a stepped morphology. In the positive active material layer, the second powder of a stepped morphology can be more synergistically compounded with the first powder of an olivine structure to improve the uniformity of the positive active material layer and facilitate the intercalation and deintercalation of active ions, thereby further improving the specific discharge capacity of the electrochemical device, and endows the electrochemical device with a relatively high energy density.

In any embodiment of this application, the second powder comprises an element M, and the element M includes at least one of Al, Ti, Cr, Ce, Nb, Y, or Mg. After the element M is added into the second powder, the element M can improve the stability of the manganese-oxygen bond and suppress the dissolution of manganese, thereby further improving the cycle performance of the electrochemical device. In addition, the element M can increase the content of deintercalatable active ions in the second powder, thereby further increasing the specific discharge capacity of the electrochemical device and endowing the electrochemical device with a relatively high energy density.

In any embodiment of this application, based on a mass of the second powder, a mass percentage ω_{M} of an element M and a mass percentage ω_{Mn} of manganese satisfy: 0.01% < ω_{M}/ω_{Mn} ≤ 4%, and preferably, 0.02% < ω_{M}/ω_{Mn} ≤ 3.5%. When the ratio of the mass percentage ω_{M} of the element M to the mass percentage ω_{Mn} of manganese falls within an appropriate range, the stability of the manganese-oxygen bond is further improved, and the dissolution of manganese is further suppressed. In addition, this makes the content of the deintercalatable active ions in the second powder fall within an appropriate range, thereby further increasing the specific discharge capacity of the electrochemical device, improving the cycle performance of the electrochemical device, and endowing the electrochemical device with a relatively high energy density.

In any embodiment of this application, a compaction density of the positive active material layer is 2.0 g/cm³ to 2.8 g/cm³, and preferably, 2.2 g/cm³ to 2.6 g/cm³. Controlling the compaction density of the positive active material layer to fall within an appropriate range is conducive to further improving the cycle performance of the electrochemical device and increasing the specific discharge capacity of the electrochemical device.

In any embodiment of this application, a coating weight of the positive active material layer on a single side is 100 mg/1540.25 mm² to 500 mg/1540.25 mm², and preferably, 150 mg/1540.25 mm² to 450 mg/1540.25 mm². Controlling the coating weight of the positive active material layer on a single side to fall within an appropriate range is conducive to further improving the cycle performance of the electrochemical device and increasing the specific discharge capacity of the electrochemical device.

In any embodiment of this application, the electrolyte comprises an additive. The additive includes at least one of an unsaturated carbonate ester or a sulfur-oxygen double bond-containing compound. Based on a mass of the electrolyte, a mass percentage of the additive is 0.01% to 5%. When the additive is added to the electrolyte of this application, the additive can decompose on the surface of the positive electrode to form an interface protection film, thereby improving the oxidation resistance of the positive active material, and further improving the cycle performance of the electrochemical device. The additive can also form a dense and stable interface film on the surface of the negative active material, thereby reducing the ion transfer resistance of the negative electrode interface, and also further improving the cycle performance of the electrochemical device. The mass percentage of the additive in the electrolyte falling within an appropriate range can effectively improve the cycle performance of the electrochemical device.

In any embodiment of this application, the unsaturated carbonate ester includes at least one of vinylene carbonate or vinyl ethylene carbonate.

In any embodiment of this application, the sulfur-oxygen double bond-containing compound includes at least one of 1,3-propane sultone, propene sultone, or vinylene sulfate.

In any embodiment of this application, based on a mass of the electrolyte, a mass percentage of the additive is 0.05% to 4%.

A second aspect of this application provides an electronic device. The electronic device includes the electrochemical device disclosed in the first aspect of this application.

In this application, the positive active material layer includes a first powder and a second powder. After the electrochemical device is fully discharged, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°. The first powder includes iron, and the second powder includes manganese. The second powder with the first diffraction peak can provide a relatively high gravimetric capacity, and the first powder with the second diffraction peak can provide good structural stability and charge-discharge reversibility. The two types of powders can exert a good synergistic effect in the positive active material layer. In this way, the positive active material layer is endowed with a high gravimetric capacity, high structural stability, and high charge-discharge reversibility, thereby improving the specific discharge capacity and energy density of the electrochemical device and enhancing the cycle performance of the electrochemical device.

### BRIEF DESCRIPTION OF DRAWINGS

FIG. 1 is an X-ray diffraction pattern of a positive active material layer according to Example 1; and
FIG. 2 is an enlarged view of an X-ray diffraction pattern of a positive active material layer according to Example 1.

### DETAILED DESCRIPTION OF EMBODIMENTS

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application. All other embodiments derived by a person skilled in the art based on the technical solutions and embodiments provided herein without making any creative efforts still fall within the protection scope of this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A or B" mean: A alone; B alone; or both A and B. In another example, if items A, B, and C are listed, the phrases "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

In an existing lithium-ion battery that uses lithium iron phosphate as a positive electrode material, due to a low conductivity of lithium iron phosphate, the capacity of the lithium-ion battery is usually increased by reducing the particle diameter of the lithium iron phosphate. However, a smaller particle diameter results in a low compaction density of the lithium iron phosphate material and a decrease in the energy density of the battery.

In order to solve the above problems, the applicant hereof has effectively improved the specific discharge capacity of the positive electrode material and the compaction density of the positive electrode plate through extensive research, thereby significantly improving the energy density and cycle performance of the electrochemical device.

### Electrochemical device

A first aspect of this application provides an electrochemical device. The electrochemical device includes any device in which an electrochemical reaction occurs to implement conversion between chemical energy and electrical energy. Specific examples of the electrochemical device include but are not limited to a lithium-ion battery or a sodium-ion battery.

The electrochemical device of this application includes a positive electrode, a negative electrode, and an electrolyte. The positive electrode includes a positive active material layer. The positive active material layer includes a first powder and a second powder. After the electrochemical device is fully discharged, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°.

In this application, a fully discharged electrochemical device bears the following meaning: an electrochemical device is charged at a constant current of 0.2C until the voltage reaches 3.65 V, and then charged at a constant voltage until the current drops to 0.05C, left to stand for 5 minutes, and then discharged at a constant current of 0.2C until the voltage drops to 2.5 V; the above charging and discharging process is repeated for two cycles, and the resulting electrochemical device is a fully discharged electrochemical device.

In the electrochemical device of this application, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°. The first diffraction peak is a diffraction peak corresponding to the second powder, and the second diffraction peak is a diffraction peak corresponding to the first powder. The second powder with the first diffraction peak can provide a relatively high gravimetric capacity, and the first powder with the second diffraction peak can provide good structural stability and charge-discharge reversibility. The two types of powders can exert a good synergistic effect in the positive active material layer. In this way, the positive active material layer is endowed with a high gravimetric capacity, high structural stability, and high charge-discharge reversibility, thereby improving the specific discharge capacity and energy density of the electrochemical device and enhancing the cycle performance of the electrochemical device.

In the electrochemical device of this application, the first powder includes iron, and the second powder includes manganese. In this application, the first powder in the positive active material layer includes an olivine structure. This structure is relatively stable, and little changes in volume during the charge and discharge of the electrochemical device. In other words, the intercalation and deintercalation of active ions such as lithium ions cause little impact onto the structure of the first powder, thereby exhibiting high reversibility of charging and discharging. The second powder in the positive active material layer possesses a relatively high gravimetric capacity, and endows the electrochemical device with a relatively high specific discharge capacity. The electrochemical device of this application can give full play to the synergistic effect between the first powder and the second powder in the positive active material layer. During the charge and discharge of the electrochemical device, the active lithium in the second powder is deintercalated. A part of the active lithium can be deposited on the negative electrode, thereby effectively compensating for the irreversible loss of active lithium caused by repair of the SEI film on the surface of the negative active material. The remaining active lithium can be intercalated into the first powder, thereby effectively improving the cycle performance of the electrochemical device.

In some embodiments, a peak intensity I_{A} of the first diffraction peak and a peak intensity I_{B} of the second diffraction peak satisfy: 0 < I_{A}/I_{B} ≤ 0.3. For example, the peak intensity I_{A} of the first diffraction peak and the peak intensity I_{B} of the second diffraction peak satisfy: 0.05 ≤ I_{A}/I_{B} ≤ 0.3, 0.1 ≤ I_{A}/I_{B} ≤ 0.3, 0.15 ≤ I_{A}/I_{B} ≤ 0.3, 0.2 ≤ I_{A}/I_{B} ≤ 0.3, 0.25 ≤ I_{A}/I_{B} ≤ 0.3, 0.05 ≤ I_{A}/I_{B} ≤ 0.25, 0.1 ≤ I_{A}/I_{B} ≤ 0.25, 0.15 ≤ I_{A}/I_{B} ≤ 0.25, 0.2 ≤ I_{A}/I_{B} ≤ 0.25, 0.05 ≤ I_{A}/I_{B} ≤ 0.2, 0.1 ≤ I_{A}/I_{B} ≤ 0.2, 0.15 ≤ I_{A}/I_{B} ≤ 0.2, 0.05 ≤ I_{A}/I_{B} ≤ 0.15, or 0.05 ≤ I_{A}/I_{B} ≤ 0.1. Preferably, the peak intensity I_{A} of the first diffraction peak and the peak intensity I_{B} of the second diffraction peak satisfy: 0.05 ≤ I_{A}/I_{B} ≤ 0.25.

In this application, the ratio of the peak intensity I_{A} of the first diffraction peak to the peak intensity I_{B} of the second diffraction peak correlates with the structure and content of the second powder as well as the structure and content of the first powder. When the peak intensity I_{A} of the first diffraction peak and the peak intensity I_{B} of the second diffraction peak satisfy the above relation, it means that the structure and content of the second powder as well as the structure and content of the first powder satisfy a specified relationship. In this case, the second powder works more synergistically with the first powder, and the active lithium in the second powder can effectively compensate for the loss of active lithium on the surface of the negative active material, and can be efficiently intercalated into the first powder, thereby ensuring sufficient ion transfer inside the electrochemical device and improve the electrical performance, and effectively improving the specific discharge capacity and cycle performance of the electrochemical device.

In this application, the X-ray diffraction pattern of the positive active material layer, the peak intensity of the first diffraction peak and the second diffraction peak bear the meanings well known in the art, and may be determined by a method known in the art. An exemplary method is: charging a lithium-ion battery at a constant current of 0.2C until the voltage reaches 3.65 V, and then charging the battery at a constant voltage until the current drops to 0.05C; leaving the battery to stand for 5 minutes, and then discharging the battery at a constant current of 0.2C until the voltage drops to 2.5 V. Repeating the above charging and discharging steps for two cycles (at this time, the battery is fully discharged); subsequently, disassembling the lithium-ion battery, taking out the positive electrode plate, immersing the positive electrode plate in dimethyl carbonate (DMC) for 30 minutes to remove the electrolyte and by-products from the surface of the positive electrode plate, and then drying the positive electrode plate in a ventilating cabinet for 4 hours; and scraping off the dried positive active material layer with a scraper to obtain positive active material layer powder. Putting the positive active material layer powder into a specimen holder of an XRD test instrument (Model: Bruker D8). Scanning the specimen at a speed of 2°/min at a scan angle of 10° to 90° to obtain an XRD diffraction pattern. Calculating the peak position and peak intensity of the first diffraction peak and the second diffraction peak of the positive active material in the X-ray diffraction pattern to obtain an I_{A}/I_{B} ratio.

In some embodiments, based on a mass of the positive active material, a mass percentage ω_{Mn} of manganese and a mass percentage ω_{Fe} of iron satisfy: 0.01% ≤ ω_{Mn}/ω_{Fe} ≤ 30%. For example, the mass percentage ω_{Mn} of manganese and the mass percentage ω_{Fe} of iron satisfy: 0.05% ≤ ω_{Mn}/ω_{Fe} ≤ 30%, 0.1% ≤ ω_{Mn}/ω_{Fe} ≤ 30%, 0.5% ≤ ω_{Mn}/ω_{Fe} ≤ 30%, 1% ≤ ω_{Mn}/ω_{Fe} ≤ 30%, 5% ≤ ω_{Mn}/ω_{Fe} ≤ 30%, 10% ≤ ω_{Mn}/ω_{Fe} ≤ 30%, 15% ≤ ω_{Mn}/ω_{Fe} ≤ 30%, 20% ≤ ω_{Mn}/ω_{Fe} ≤ 30%, 25% ≤ ω_{Mn}/ω_{Fe} ≤ 30%, 0.05% ≤ ω_{Mn}/ω_{Fe} ≤ 25%, 0.1% ≤ ω_{Mn}/ω_{Fe} ≤ 25%, 0.5% ≤ ω_{Mn}/ω_{Fe} ≤ 25%, 1% ≤ ω_{Mn}/ω_{Fe} ≤ 25%, 5% ≤ ω_{Mn}/ω_{Fe} ≤ 25%,10% ≤ ω_{Mn}/ω_{Fe} ≤ 25%, 15% ≤ ω_{Mn}/ω_{Fe} ≤ 25%,20% ≤ ω_{Mn}/ω_{Fe} ≤ 25%,0.05% ≤ ω_{Mn}/ω_{Fe} ≤ 20%, 0.1% ≤ ω_{Mn}/ω_{Fe} ≤ 20%, 0.5% ≤ ω_{Mn}/ω_{Fe} ≤ 20%, 1% ≤ ω_{Mn}/ω_{Fe} ≤ 20%,5% ≤ ω_{Mn}/ω_{Fe} ≤ 20%,10% ≤ ω_{Mn}/ω_{Fe} ≤ 20%, 15% ≤ ω_{Mn}/ω_{Fe} ≤ 20%, 0.05% ≤ ω_{Mn}/ω_{Fe} ≤ 15%, 0.1% ≤ ω_{Mn}/ω_{Fe} ≤ 15%, 0.5% ≤ ω_{Mn}/ω_{Fe} ≤ 15%, 1% ≤ ω_{Mn}/ω_{Fe} ≤ 15%, 5% ≤ ω_{Mn}/ω_{Fe} ≤ 15%, 10% ≤ ω_{Mn}/ω_{Fe} ≤ 15%, 0.05% ≤ ω_{Mn}/ω_{Fe} ≤ 10%, 0.1% ≤ ω_{Mn}/ω_{Fe} ≤ 10%, 0.5% ≤ ω_{Mn}/ω_{Fe} ≤ 10%, 1% ≤ ω_{Mn}/ω_{Fe} ≤ 10%, 5% ≤ ω_{Mn}/ω_{Fe} ≤ 10%, 0.05% ≤ ω_{Mn}/ω_{Fe} ≤ 5%, 0.1% ≤ ω_{Mn}/ω_{Fe} ≤ 5%, 0.5% ≤ ω_{Mn}/ω_{Fe} ≤ 5%, 1% ≤ ω_{Mn}/ω_{Fe} ≤ 5%, 0.05% ≤ ω_{Mn}/ω_{Fe} ≤ 1%, 0.1% ≤ ω_{Mn}/ω_{Fe} ≤ 1%, or 0.05% ≤ ω_{Mn}/ω_{Fe} ≤ 0.1%. Preferably, the mass percentage ω_{Mn} of manganese and the mass percentage ω_{Fe} of iron satisfy: 0.05% ≤ ω_{Mn}/ω_{Fe} ≤ 25%.

In this application, the mass percentage ω_{Mn} of manganese and the mass percentage ω_{Fe} of iron represent the mass percentage of the second powder and the mass percentage of the first powder in the positive active material layer, respectively. When the mass percentage ω_{Mn} of manganese is higher, it indicates that the mass percentage of the second powder in the positive active material is relatively high, so that the electrochemical device achieves a relatively high specific discharge capacity due to the relatively high gravimetric capacity of the second powder. Without intending to be limited by any theory, the applicant hereof finds that, the active lithium in the second powder is deintercalated and deposited onto the negative electrode during the cycling of the electrochemical device to compensate for the loss of active lithium on the surface of the negative active material. Therefore, when the mass percentage of the second powder in the positive active material layer is relatively high, a relatively large amount of deintercalatable active lithium is available from the second powder, thereby not only effectively compensating for the loss of active lithium on the surface of the negative active material, but also enabling sufficient active lithium to be intercalated back into the first powder, ensuring sufficient transfer of active ions, effectively improving the cycle capacity retention rate of the electrochemical device, and improving the cycle performance of the electrochemical device.

Without intending to be limited by any theory, the applicant hereof also finds that the mass percentage of the second powder needs to avoid being excessive in contrast to the first powder. When the mass percentage of the second powder is excessive, deintercalatable lithium available from the second powder for compensation will be excessive. When the amount of the deintercalatable lithium is larger than the amount of lithium that is intercalatable back into the positive active material layer, the internal resistance will increase, thereby reducing the specific discharge capacity of the electrochemical device. Therefore, by controlling the mass percentage of the second powder and the first powder in the positive active material layer, that is, the mass percentage ω_{Mn} of manganese and the mass percentage ω_{Fe} of iron, to fall within the above ranges, this application can effectively improve the cycle performance of the electrochemical device, increase the specific discharge capacity of the electrochemical device, and endow the electrochemical device with a relatively high energy density.

In some embodiments, the second powder has a stepped morphology. In the positive active material layer, the second powder of a stepped morphology can be more synergistically compounded with the first powder of an olivine structure to improve the uniformity of the positive active material layer and facilitate the intercalation and deintercalation of active ions, thereby further improving the specific discharge capacity of the electrochemical device, and endows the electrochemical device with a relatively high energy density.

In this application, the morphology of the second powder may be determined by the following method: disassembling a lithium-ion battery to obtain a positive electrode plate, oven-drying the positive electrode plate, snapping off the dried positive electrode plate by using liquid nitrogen, and then using a scanning electron microscope (SEM) to observe the cross-section of the positive electrode plate (that is, the cross-section in the thickness direction of the positive active material layer), so that the morphology of the second powder can be observed and analyzed. In some embodiments, the second powder comprises an element M. The element M includes at least one of Al, Ti, Cr, Ce, Nb, Y, or Mg. After the element M is added into the second powder, the element M can improve the stability of the manganese-oxygen bond. The improved stability of the manganese-oxygen bond can suppress the dissolution of manganese, thereby further improving the cycle performance of the electrochemical device. In addition, the element M can increase the content of deintercalatable lithium ions in the second powder. In this way, sufficient lithium ions are deintercalatable from the second powder to compensate for the loss of active lithium on the surface of the negative active material surface. At the same time, sufficient active lithium is still available for being intercalated back into the positive active material layer, thereby further increasing the specific discharge capacity of the electrochemical device and endowing the electrochemical device with a relatively high energy density.

The second powder can be observed and analyzed by the following method: disassembling a lithium-ion battery to obtain a positive electrode plate, oven-drying the positive electrode plate, snapping off the dried positive electrode plate by use of liquid nitrogen to obtain a cross-section, and then using a scanning electron microscope (SEM) to observe the cross-section of the positive electrode plate (that is, the cross-section in the thickness direction of the positive active material layer), and the type and content of the element M as well as the content of Mn in the second powder can be analyzed by using an elemental analyzer (EDS).

In some embodiments, based on the mass of the second powder, the mass percentage ω_{M} of an element M and the mass percentage ω_{Mn} of manganese satisfy: 0.01% < ω_{M}/ω_{Mn} ≤ 4%. For example, the mass percentage ω_{M} of the element M and the mass percentage ω_{Mn} of manganese satisfy: 0.05% ≤ ω_{M}/ω_{Mn} ≤ 4%, 0.1% ≤ ω_{M}/ω_{Mn} ≤ 4%, 0.5% ≤ ω_{M}/ω_{Mn} ≤ 4%, 1% ≤ ω_{M}/ω_{Mn} ≤ 4%, 1.5% ≤ ω_{M}/ω_{Mn} ≤ 4%, 2% ≤ ω_{M}/ω_{Mn} ≤ 4%, 2.5% ≤ ω_{M}/ω_{Mn} ≤ 4%, 3% ≤ ω_{M}/ω_{Mn} ≤ 4%, 3.5% ≤ ω_{M}/ω_{Mn} ≤ 4%, 0.05% ≤ ω_{M}/ω_{Mn} ≤ 3.5%, 0.1% ≤ ω_{M}/ω_{Mn} ≤ 3.5%, 0.5% ≤ ω_{M}/ω_{Mn} ≤ 3.5 %, 1% ≤ ω_{M}/ω_{Mn} ≤ 3.5%, 1.5% ≤ ω_{M}/ω_{Mn} ≤ 3.5%, 2% ≤ ω_{M}/ω_{Mn} ≤ 3.5%, 2.5% ≤ ω_{M}/ω_{Mn} ≤ 3.5%, 3% ≤ ω_{M}/ω_{Mn} ≤ 3.5%, 0.05% ≤ ω_{M}/ω_{Mn} ≤ 3%, 0.1% ≤ ω_{M}/ω_{Mn} ≤ 3%, 0.5% ≤ ω_{M}/ω_{Mn} ≤ 3%, 1% ≤ ω_{M}/ω_{Mn} ≤ 3%, 1.5% ≤ ω_{M}/ω_{Mn} ≤ 3%, 2% ≤ ω_{M}/ω_{Mn} ≤ 3%, 2.5% ≤ ω_{M}/ω_{Mn} ≤ 3%, 0.05% ≤ ω_{M}/ω_{Mn} ≤ 2.5%, 0.1% ≤ ω_{M}/ω_{Mn} ≤ 2.5%, 0.5% ≤ ω_{M}/ω_{Mn} ≤ 2.5%, 1% ≤ ω_{M}/ω_{Mn} ≤ 2.5%, 1.5% ≤ ω_{M}/ω_{Mn} ≤ 2.5%, 2% ≤ ω_{M}/ω_{Mn} ≤ 2.5%, 0.05% ≤ ω_{M}/ω_{Mn} ≤ 2%, 0.1% ≤ ω_{M}/ω_{Mn} ≤ 2%, 0.5% ≤ ω_{M}/ω_{Mn} ≤ 2%, 1% ≤ ω_{M}/ω_{Mn} ≤ 2%, 1.5% ≤ ω_{M}/ω_{Mn} ≤ 2%, 0.05% ≤ ω_{M}/ω_{Mn} ≤ 1.5%, 0.1% ≤ ω_{M}/ω_{Mn} ≤ 1.5%, 0.5% ≤ ω_{M}/ω_{Mn} ≤ 1.5%, 1% ≤ ω_{M}/ω_{Mn} ≤ 1.5%, 0.05% ≤ ω_{M}/ω_{Mn} ≤ 1%, 0.1% ≤ ω_{M}/ω_{Mn} ≤ 1%, or 0.5% ≤ ω_{M}/ω_{Mn} ≤ 1%. Preferably, the mass percentage ω_{M} of the element M and the mass percentage ω_{Mn} of manganese satisfy: 0.02% < ω_{M}/ω_{Mn} ≤ 3.5%.

When the ratio of the mass percentage ω_{M} of the element M to the mass percentage ω_{Mn} of manganese falls within an appropriate range, the stability of the manganese-oxygen bond is further improved, and the dissolution of manganese is further suppressed. In addition, this makes the content of deintercalatable lithium in the second powder fall within an appropriate range, so that sufficient lithium is available from the second powder to compensate for the loss of active lithium on the surface of the negative active material, and sufficient active lithium is available for being intercalated back into the positive active material layer, thereby further increasing the specific discharge capacity of the electrochemical device, endowing the electrochemical device with a relatively high energy density, and improving the cycle performance of the electrochemical device.

In some embodiments, the compaction density of the positive active material layer is 2.0 g/cm³ to 2.8 g/cm³. For example, the compaction density of the positive active material layer is 2.1 g/cm³, 2.2 g/cm³, 2.3 g/cm³, 2.4 g/cm³, 2.5 g/cm³, 2.6 g/cm³, 2.7 g/cm³, or a value falling within a range formed by any two thereof. Preferably, the compaction density of the positive active material layer is 2.2 g/cm³ to 2.6 g/cm³.

In some embodiments, the coating weight of the positive active material layer on a single side is 100 mg/1540.25 mm² to 500 mg/1540.25 mm². For example, the coating weight of the positive active material layer on a single side is 100 mg/1540.25 mm², 150 mg/1540.25 mm², 200 mg/1540.25 mm², 250 mg/1540.25 mm², 3100 mg/1540.25 mm², 350 mg/1540.25 mm², 400 mg/1540.25 mm², 450 mg/1540.25 mm², 500 mg/1540.25 mm², or a value falling within a range formed by any two thereof. Preferably, the coating weight of the positive active material layer on a single side is 150 mg/1540.25 mm² to 450 mg/1540.25 mm².

After the second powder of a stepped morphology is added into the positive active material layer of this application, the contact between the positive active material particles is closer, thereby improving the compaction density of the positive active material layer, and endowing the electrochemical device with a relatively high energy density. Controlling the coating weight of the positive active material layer on a single side and compaction density to fall within an appropriate range is conducive to the migration of electrons and active ions, and further improves the cycle performance of the electrochemical device and increases the specific discharge capacity of the electrochemical device.

In this application, the compaction density of the positive active material layer and the coating weight on a single side bears a meaning well known in the art, and may be measured by a method known in the art. An exemplary test method is: cutting a dried positive electrode plate into 5 specimens, where the area of each specimen is 1540.25 mm²; and measuring the thickness of each specimen of the positive electrode plate with a ten-thousandth micrometer, denoted as d₀ cm; scraping off the positive active material layer from the positive electrode plate by using a scraper; weighing the positive active material layer with a balance to obtain a mass, that is, the mass on an 1540.25 mm² area of the positive active material layer, denoted as m (mg); measuring, by using a ten-thousandth micrometer, the thickness of the positive current collector stripped of the positive active material layer, denoted as d (cm); and calculating the compaction density of the positive active material layer as: compaction density P = m/[154.025 × (d₀ - d)]. The compaction density of the positive active material layer is an average of the measured values of the compaction density of the positive active material layers in the 5 specimens cut out of the positive electrode plate. The coating weight of the positive active material layer on a single side is an average of the measured values of the mass of the positive active material layer in the 5 specimens cut out of the positive electrode plate.

In some embodiments, the first powder includes, but is not limited to, lithium iron phosphate, or a composite of lithium iron phosphate and carbon.

In some embodiments, as an example, the second powder may be prepared by the following method: placing MnOOH into a corundum crucible, heating the crucible to 500 °C at a heating rate of 5 °C/min in an air atmosphere, and keeping the temperature constant for 1 hour to obtain anhydrous Mn₃O₄; weighing out the anhydrous Mn₃O₄ and LiOH at a molar ratio of 1.05: 1 between Li and Mn, and adding nano Cr₂O₃ at a mass ratio of 0.008: 1 between Cr and Mn, and mixing well by using a sand mill, so as to obtain a mixture precursor; placing the precursor into a corundum crucible, passing nitrogen at a rate of 2 m³/h into the crucible, increasing the temperature to 940 °C at a heating rate of 5 °C/min, and keeping the temperature constant for 10 hours; cooling down the mixture naturally to a room temperature to obtain a second powder comprising manganese. In the above preparation process, Mn₃O₄ may be replaced by MnO₂, and the mixing ratio with LiOH may be modified based on the Mn content.

In some embodiments, the positive active material layer further optionally includes a conductive agent and a binder. Specific types of the conductive agent and the binder are not particularly limited, and may be selected as required. As an example, the conductive agent includes, but is not limited to, at least one of conductive graphite, superconductive carbon, acetylene black, carbon black, Ketjen black, carbon dots, carbon nanotubes, graphene, or carbon nanofibers. As an example, the binder includes, but is not limited to, at least one of styrene-butadiene rubber (SBR), water-based acrylic resin (Water-based acrylic resin), carboxymethyl cellulose (CMC), polyvinylidene difluoride (PVDF), polytetrafluoroethylene (PTFE), polyvinyl butyral (PVB), poly(ethylene-co-vinyl acetate) (EVA), or polyvinyl alcohol (PVA).

In this application, the positive electrode is also referred to as a positive electrode plate. The positive electrode plate further includes a positive current collector. The positive active material layer is disposed on at least one surface of the positive current collector.

In some embodiments, the positive current collector may be a metal foil or a porous metal sheet, for example, a foil or porous sheet of metals such as aluminum, copper, nickel, titanium, or silver, or an alloy thereof. As an example, the positive current collector is an aluminum foil.

In some embodiments, the positive current collector includes two surfaces opposite to each other in a thickness direction of the current collector. The positive active material layer is disposed on either or both of the two opposite surfaces of the positive current collector. When the positive active material layer is disposed on both surfaces of the positive electrode current collector, the technical solution is deemed falling within the protection scope of this application as long as the parameters of the positive active material layer on any one of the surfaces satisfy the parameter range specified in this application.

The positive electrode plate may be prepared by a conventional method in this field. A typical method for preparing the positive electrode plate is: dispersing the first powder, the second powder, and optionally, a conductive agent and a binder in a solvent such as N-methyl-pyrrolidone (NMP) to form a homogeneous positive electrode slurry, coating a positive current collector with the positive electrode slurry, and performing steps such as oven-drying and cold calendering to obtain a positive electrode plate.

The positive electrode plate of this application does not exclude other positive active materials different from the first powder and the second powder. The specific types of other positive active materials are not particularly limited, and may be selected as required. As an example, other positive active materials include, but are not limited to, at least one of lithium manganese phosphate, a composite of lithium manganese phosphate and carbon, lithium manganese iron phosphate, or a composite of lithium manganese iron phosphate and carbon, or a modified compound thereof.

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In some other embodiments, the positive electrode plate according to this application further includes a protection layer overlaying the surface of the positive active material layer.

In this application, the electrolyte serves to conduct active ions between the positive electrode and the negative electrode.

In some embodiments, the electrolyte comprises an additive. The additive includes at least one of an unsaturated carbonate ester or a sulfur-oxygen double bond-containing compound.

As an example, the additives include, but are not limited to, at least one of vinylene carbonate (VC), vinyl ethylene carbonate (VEC), ethylene sulfate (DTD), propylene sulfate, ethylene sulfite (ES), 1,3-propane sultone (PS), or propylene-1,3-sultone (PES).

When the additive is added to the electrolyte of this application, the additive can decompose on the surface of the positive electrode to form an interface protection film, thereby improving the oxidation resistance of the positive active material layer, stabilizing the structure of the positive active material, reducing side reactions between the positive active material layer and the electrolyte, and further improving the cycle performance of the electrochemical device. The additive can also form a dense and stable interface film on the surface of the negative active material, thereby reducing the ion transfer resistance of the negative electrode interface, and also further improving the cycle performance of the electrochemical device.

In some embodiments, based on a mass of the electrolyte, a mass percentage of the additive is 0.01% to 5%. For example, the mass percentage of the additive is 0.05%, 0.1%, 0.5%, 1%, 1.5%, 2%, 2.5%, 3%, 3.5%, 4%, 4.5%, 4%, or a value falling within a range formed by any two thereof. Preferably, the mass percentage of the additive is 0.5% to 3%.

The mass percentage of the additive in the electrolyte falling within an appropriate range is conducive to forming an interface protection film of an appropriate thickness on the surface of the material, has relatively low impedance, and improves the cycle performance of the electrochemical device. If the mass percentage of the additive is overly low, the interface protection film will be insufficiently formed, thereby impairing the performance of the electrochemical device. If the mass percentage of the additive is overly high, the impedance of the electrolyte will increase, the migration rate of active ions will decrease, and the cycle performance of the electrochemical device will be impaired.

In some embodiments, the electrolyte further includes an organic solvent, a lithium salt, and optionally other electrolyte binders. The types of the organic solvent, the lithium salt, and other optional electrolyte additives are not particularly limited, and may be selected according to actual needs.

In some embodiments, as an example, the lithium salt includes but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato) borate (LiBOB), lithium difluorophosphate (LiPO₂F₂), lithium difluoro(bisoxalato) phosphate (LiDFOP), and lithium tetrafluoro(oxalato) phosphate (LiTFOP). Of the above lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the optional electrolyte additive may include an electrolyte additive capable of improving specified performance of the battery, for example, an electrolyte additive for improving overcharge performance of the battery, an electrolyte additive for improving high- or low-temperature performance of the battery, or the like.

The electrolyte may be prepared by a conventional method in this field. For example, the electrolyte may be obtained by mixing well an organic solvent, a lithium salt, an additive, and other optional electrolyte additives. The order of adding the ingredients is not particularly limited. For example, the lithium salt, the additive, and other optional electrolyte additives may be added to the organic solvent and mixed well to obtain the electrolyte; or, the lithium salt may be added into the organic solvent first, and then the additive and other optional electrolyte additives are added into the organic solvent and mixed well to obtain an electrolyte.

In this application, the negative electrode is also referred to as a negative electrode plate. The negative electrode plate may be a metallic lithium sheet, or may be an electrode plate that includes a negative current collector and a negative active material layer disposed on at least one surface of the negative current collector. The negative active material layer typically includes a negative active material and optionally a conductive agent, a binder, and a thickener.

The material, composition, and manufacturing method of the negative electrode plate used in this application may include any technology well-known in the prior art.

The specific type of the negative active material is not particularly limited, and may be selected as required. As an example, the negative active material includes but is not limited to at least one of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, SnO₂, spinel-structured Li₄Ti₅O₁₂, or a Li-Al alloy.

The specific type of the conductive agent is not particularly limited, and may be selected as required. As an example, the conductive agent includes, but is not limited to, at least one of conductive graphite, superconductive carbon, acetylene black, carbon black, Ketjen black, carbon dots, carbon nanotubes, graphene, or carbon nanofibers.

The specific type of the binder is not particularly limited, and may be selected as required. As an example, the binder includes, but is not limited to, at least one of styrene-butadiene rubber (SBR), polyvinylidene difluoride (PVDF), polytetrafluoroethylene (PTFE), polyvinyl butyral (PVB), water-based acrylic resin (Water-based acrylic resin), or carboxymethyl cellulose.

The specific type of the thickener is not particularly limited, and may be selected as required. As an example, the thickener includes, but is not limited to, sodium carboxymethyl cellulose (CMC).

However, this application is not limited to such materials. The negative electrode plate in this application may comprise other well-known materials suitable for use as a negative active material, a conductive agent, a binder, or a thickener.

In some embodiments, the negative current collector includes two surfaces opposite to each other in a thickness direction of the current collector. The negative electrode film layer is disposed on either or both of the two opposite surfaces of the negative current collector.

The negative current collector may be made of a metal foil or a porous metal sheet, for example, a foil or porous plate made of metal such as copper, nickel, titanium, or iron, or an alloy thereof. As an example, the negative current collector is a copper foil.

The negative electrode plate may be prepared by a conventional method in this field. Typically, a method for preparing the negative electrode plate includes: dispersing the negative active material and optionally the conductive agent, the binder, and the thickener in a solvent such as N-methyl-pyrrolidone (NMP) or deionized water to form a homogeneous negative electrode slurry, coating a negative current collector with the negative electrode slurry, and performing steps such as drying and cold-calendering to obtain a negative electrode plate.

The negative electrode plate of this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer. In some other embodiments, the negative electrode plate according to this application further includes a protection layer overlaying the surface of the negative active material layer.

In this application, the electrochemical device further includes a separator. Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the separator may be made of a material including, but not limited to, one or more of glass fibers, non-woven fabric, polyethylene, polypropylene, or polyvinylidene fluoride. The separator may be a single-layer film or a multilayer composite film. When the separator is a multilayer composite film, materials of different layers may be identical or different. In some embodiments, the separator may be coated with a ceramic coating or a metal oxide coating.

### Electronic device

A second aspect of this application provides an electronic device. The electronic device includes the electrochemical device disclosed in the first aspect of this application. The electrochemical device may be used as a power supply in the electronic device.

The electronic device is not particularly limited herein, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

### Examples

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Example 1

### Preparing a second powder

Placing MnOOH in a corundum crucible, heating the crucible to 500 °C at a heating rate of 5 °C/min in an air atmosphere, and keeping the temperature constant for 1 hour to obtain anhydrous Mn₃O₄; Weighing out the anhydrous Mn₃O₄ and LiOH at a molar ratio of 1.05: 1 between Li and Mn, and adding nano Cr₂O₃ at a mass ratio of 0.0213: 1 between Cr and Mn, and mixing well by using a sand mill, so as to obtain a mixture precursor; Placing the precursor into a corundum crucible, passing nitrogen at a rate of 2 m³/h into the crucible, increasing the temperature to 940 °C at a heating rate of 5 °C/min, and keeping the temperature constant for 10 hours; cooling down the mixture naturally to a room temperature to obtain a second powder, where a stepped structure with a width of 600 nm to 700 nm exists on the surface of the second powder.

### Preparing a positive electrode plate

Mixing the first powder lithium iron phosphate, the second powder synthesized above, conductive agent Super P, and a binder polyvinylidene difluoride at a mass ratio of 88.32: 7.68: 2.4: 1.6, adding N-methyl-pyrrolidone (NMP), and stirring the mixture with a vacuum mixer until the system is homogeneous, so as to obtain a positive electrode slurry in which the solid content is 70 wt%. Coating one surface of a 10 µm-thick positive current collector aluminum foil with the positive electrode slurry evenly, and drying the aluminum foil at 85 °C to obtain a positive electrode plate coated with a 65 µm-thick positive active material layer on a single side. Repeating the foregoing steps on the other surface of the aluminum foil to obtain a positive electrode plate coated with the positive active material layer on both sides. Subsequently, performing cold-calendering, cutting, and slitting, and drying the electrode plate in an 85 °C vacuum environment for 4 hours to obtain a positive electrode plate of 74 mm × 867 mm in size.

### Preparing a negative electrode plate

Mixing artificial graphite as a negative active material, Super P as a conductive agent, sodium carboxymethyl cellulose (CMC) as a thickener, and styrene-butadiene rubber (SBR) as a binder at a mass ratio of 96.4: 1.5: 0.5: 1.6. Adding deionized water, and mixing well with a vacuum mixer to obtain a negative electrode slurry in which the solid content is 70 wt%. Coating one surface of a 10-µm thick negative current collector copper foil with the negative electrode slurry evenly, and drying the copper foil at 85 °C to obtain a negative electrode plate coated with a 63 µm-thick negative active material layer on a single side. Repeating the foregoing steps on the other surface of the aluminum foil to obtain a negative electrode plate coated with the negative active material layer on both sides. Subsequently, performing cold-calendering, cutting, and slitting, and drying the electrode plate in a 120 °C vacuum environment for 12 hours to obtain a negative electrode plate of 79 mm × 972 mm in size.

### Preparing an electrolyte

Mixing chain diethyl carbonate (DEC) and cyclic ethylene carbonate (EC) at a mass ratio of 2: 1 to obtain a base solvent, and then adding a lithium salt LiPF₆ into the base solvent to dissolve, and stirring well to obtain an electrolyte. Based on the mass of the electrolyte, the mass percentage of the LiPF₆ is 12.5%. Subsequently, adding a specified amount of additives (at least one of VC, VEC, DTD, PS, or PES) into the electrolyte.

### Preparing a separator

Mixing aqueous polyvinylidene difluoride, aluminum oxide, and polypropylene (PP) at a mass ratio of 1: 8: 1, adding deionized water, and stirring well to obtain a coating slurry in which the solid content is 50 wt%. Coating one surface of a 5 µm-thick PP film (manufactured by Celgard) with the coating slurry evenly, and drying the film at 85 °C to obtain a separator coated with a 5 µm-thick coating layer on a single side. Repeating the above steps on the other surface of the separator to obtain a separator coated with the coating layer on both sides. Subsequently, performing drying and cold-pressing to obtain a separator.

### Preparing a lithium-ion battery

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum laminated film pocket, drying the pocket, and then injecting the electrolyte. Performing steps such as vacuum sealing, standing, formation, degassing, and edge trimming to obtain a lithium-ion battery.

### Examples 2 to 38 and Comparative Examples 1 to 3

The preparation method of the lithium-ion battery is similar to that in Example 1 except that the relevant parameters for preparing the positive electrode plate and the electrolyte are adjusted, as detailed in Table 1 in which "/" indicates absence of the corresponding constituent.

### Test Part

### (1) Testing a specific discharge capacity of the lithium-ion battery

Charging a lithium-ion battery at a constant current of 0.2C until the voltage reaches 3.65 V, and then charging the battery at a constant voltage until the current drops to 0.05C; leaving the battery to stand for 5 minutes, and then discharging the battery at a constant current of 0.2C until the voltage drops to 2.5 V. Repeating the above charging and discharging steps for two cycles. Recording the capacity at the end of the second cycle as D₀; disassembling the lithium-ion battery, taking out the positive electrode plate, immersing the positive electrode plate in dimethyl carbonate (DMC) for 30 minutes to remove the electrolyte and by-products from the surface of the positive electrode plate, and then drying the positive electrode plate in a ventilating cabinet for 4 hours; and baking the electrode plate in a 400 °C vacuum environment into powder, and weighing the powder to obtain a mass m₁. Calculating the specific discharge capacity of the lithium-ion battery as: specific discharge capacity = D0/m1.

### (2) Testing the cycle performance of the lithium-ion battery

Charging a lithium-ion battery at 25 °C at a constant current of 1C until the voltage reaches 3.65 V, and then charging the battery at a constant voltage until the current drops to 0.05C. Leaving the battery to stand for 5 minutes. Subsequently, discharging the battery at a constant current of 1C until the voltage drops to 2.5 V, thereby completing one charge-discharge cycle. Recording the discharge capacity at this time as D₀₁. Repeating the above charge-discharge steps to complete 3000 cycles of the lithium-ion battery. Measuring the discharge capacity at the end of the 3000^{th} cycle, denoted as D₁. Calculating the cycle capacity retention rate of lithium-ion battery as: cycle capacity retention rate (%) = D1/D01 × 100%.

Table 1 to Table 4 show the performance test results of Examples 1 to 38 and Comparative Examples 1 to 3.

**Table 1**

| | First diffraction peak position (°) | Second diffraction peak position (°) | I_{A}/I_{B} (%) | ω_{Mn}/ω_{Fe} (%) | 25 °C 0.2C specific discharge capacity (mAh/g) | 25 °C 3000^{th}-cycle capacity retention rate (%) |
|---|---|---|---|---|---|---|
| Example 1 | 18.29 | 20.81 | 2.23 | 3.12 | 152.4 | 90.23 |
| Example 2 | 18.30 | 20.81 | 4.02 | 5.22 | 153.8 | 91.34 |
| Example 3 | 18.31 | 20.82 | 5.33 | 6.35 | 154.4 | 92.45 |
| Example 4 | 18.32 | 20.82 | 6.21 | 7.41 | 155.1 | 93.26 |
| Example 5 | 18.33 | 20.83 | 7.67 | 8.63 | 155.8 | 94.36 |
| Example 6 | 18.32 | 20.81 | 10.01 | 10.91 | 155.8 | 95.02 |
| Example 7 | 18.34 | 20.83 | 17.23 | 17.48 | 154.4 | 95.42 |
| Example 8 | 18.33 | 20.82 | 25.22 | 24.76 | 152.9 | 96.28 |
| Example 9 | 18.33 | 20.83 | 36.56 | 35.50 | 148.9 | 89.34 |
| Comparative Example 1 | / | 20.83 | / | / | 149.9 | 88.51 |

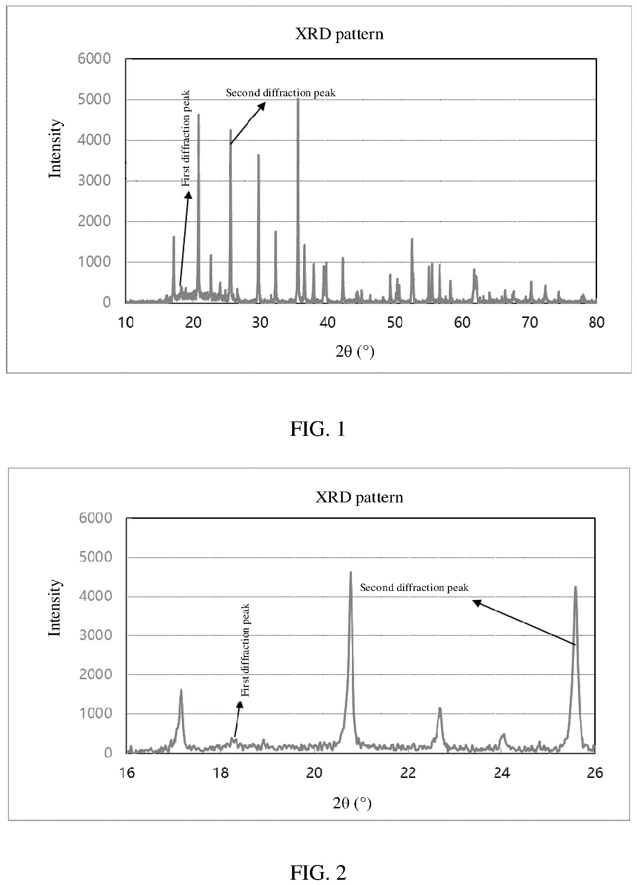

FIG. 1 is an X-ray diffraction pattern of a positive active material layer according to Example 1. As can be seen from FIG. 1, the X-ray diffraction pattern of the positive active material layer exhibits a first diffraction peak in a diffraction angle range of 17.3° to 19.3°, and exhibits a second diffraction peak in a range of 19.8° to 21.8°. As can be seen from the test results in Table 1, after the second powder is added to the positive active material layer, the specific discharge capacity of the lithium-ion battery can be significantly improved. In addition, the second powder working synergistically with the first powder can effectively compensate for the loss of active lithium on the surface of the negative active material, thereby effectively improving the energy density and cycle capacity retention rate of the lithium-ion battery, and improving the cycle performance of the lithium-ion battery.

**Table 2**

| | M element type | ω_{M}/ω_{Mn} (%) | I_{A}/I_{B} (%) | 25 °C 0.2C specific discharge capacity (mAh/g) | 25 °C 3000^{th}-cycle capacity retention rate (%) |
|---|---|---|---|---|---|
| Example 5 | Cr | 2.13 | 7.67 | 155.8 | 94.36 |
| Example 10 | Cr | 3.49 | 6.97 | 154.8 | 94.61 |
| Example 11 | Cr | 2.78 | 7.05 | 155.2 | 94.58 |
| Example 12 | Cr | 1.03 | 7.34 | 155.4 | 94.01 |
| Example 13 | Cr | 0.51 | 6.88 | 154.7 | 93.52 |
| Example 14 | Cr | 0.02 | 5.23 | 152.6 | 89.21 |
| Example 15 | Al | 1.40 | 7.44 | 155.5 | 94.23 |
| Example 16 | Al+Cr | 1.03+0.34 | 7.59 | 155.7 | 94.61 |
| Example 17 | Al+Ti | 1.04+0.33 | 7.03 | 155.2 | 94.29 |
| Example 18 | Al+Mg | 1.05+0.35 | 7.19 | 155.3 | 94.31 |
| Example 19 | Al+Y | 1.04+0.33 | 7.33 | 155.4 | 94.32 |
| Example 20 | Al+Cr+Y | 1.04+0.34+0.35 | 7.52 | 155.6 | 94.62 |
| Example 21 | Al+Cr+Y | 1.43+0.35+0.33 | 7.93 | 156.2 | 95.23 |
| Comparative Example 3 | / | / | 1.46 | 150.1 | 90.23 |

As can also be seen from the test results in Table 2, by adding the element M into the positive active material layer and controlling the mass percentage of the element M to fall within an appropriate range, this application can further improve the specific discharge capacity and cycle performance of the lithium-ion battery.

**Table 3**

| | Coating weight (mg/1540.25 mm²) | Compaction density (g/cm³) | 25 °C 3000^{th}-cycle capacity retention rate (%) |
|---|---|---|---|
| Example 5 | 298 | 2.41 | 94.36 |
| Example 22 | 118 | 2.65 | 97.76 |
| Example 23 | 226 | 2.52 | 95.33 |
| Example 24 | 350 | 2.36 | 93.24 |
| Example 25 | 495 | 2.27 | 90.67 |
| Example 26 | 545 | 2.13 | 82.67 |
| Comparative Example 1 | 298 | 2.21 | 88.51 |

As can also be seen from the test results in Table 3, by reasonably controlling the compaction density and coating weight of the positive active material layer on a single side, this application can further improve the energy density and cycle performance of the lithium-ion battery, and in turn, endow the lithium-ion battery with a high specific discharge capacity and a long cycle life.

**Table 4**

| | Type of additive | Content of additive (%) | 25 °C 3000^{th}-cycle capacity retention rate (%) |
|---|---|---|---|
| Example 5 | VC | / | 94.36 |
| Example 27 | VC | 2.50 | 95.45 |
| Example 28 | VC | 1.50 | 95.73 |
| Example 29 | VC | 3.00 | 95.21 |
| Example 30 | VC | 4.50 | 94.86 |
| Example 31 | VC | 0.05 | 94.58 |
| Example 32 | VEC | 1.50 | 95.35 |
| Example 33 | PS | 1.50 | 95.57 |
| Example 34 | PES | 1.50 | 95.78 |
| Example 35 | DTD | 1.50 | 95.41 |
| Example 36 | VC+PES | 1.00+0.50 | 96.32 |
| Example 37 | VC+DTD | 1.00+1.50 | 95.86 |
| Example 38 | VC + PS | 1.50+1.00 | 95.49 |

As can also be seen from the test results in Table 4, when the electrolyte comprises the additives, the additives are conducive to forming a more uniform and low-impedance interface protection film after the first charge-discharge cycle of the lithium-ion battery, improve the oxidation resistance of the positive active material, and prevent side reactions between the electrolyte and the positive active material layer, thereby further improving the cycle performance of the lithium-ion battery.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. An electrochemical device, comprising:
a positive electrode, a negative electrode, and an electrolyte, wherein
the positive electrode comprises a positive active material layer, and the positive active material layer comprises a first powder and a second powder;
after the electrochemical device is fully discharged, an X-ray diffraction pattern of the positive active material layer exhibits a first diffraction peak in a diffraction angle 2θ range of 17.3° to 19.3°, and exhibits a second diffraction peak in a 2θ range of 19.8° to 21.8°; and
the first powder comprises iron, and the second powder comprises manganese.

2. The electrochemical device according to claim 1, wherein a peak intensity I_{A} of the first diffraction peak and a peak intensity I_{B} of the second diffraction peak satisfy: 0 < I_{A}/I_{B} ≤ 0.3.

3. The electrochemical device according to claim 1, wherein, based on a mass of the positive active material layer, a mass percentage ω_{Mn} of manganese and a mass percentage ω_{Fe} of iron satisfy: 0.01% ≤ ω_{Mn}/ω_{Fe} ≤ 30%.

4. The electrochemical device according to claim 1, wherein the second powder satisfies at least one of conditions (1) to (2):
(1) the second powder comprises an element M, and the element M comprises at least one of Al, Ti, Cr, Ce, Nb, Y, or Mg; or
(2) the second powder has a stepped morphology.

5. The electrochemical device according to claim 4, wherein, based on a mass of the second powder, a mass percentage ω_{M} of the element M and a mass percentage ω_{Mn} of manganese satisfy: 0.01% < ω_{M}/ω_{Mn} ≤ 4%.

6. The electrochemical device according to claim 1, wherein the positive active material layer satisfies at least one of conditions (3) to (4):
(3) a compaction density of the positive active material layer is 2.0 g/cm³ to 2.8 g/cm³; or
(4) a coating weight of the positive active material layer on a single side is 100 mg/1540.25 mm² to 500 mg/1540.25 mm².

7. The electrochemical device according to claim 1, wherein the electrolyte comprises an additive, and the additive comprises at least one of an unsaturated carbonate ester or a sulfur-oxygen double bond-containing compound; and
based on a mass of the electrolyte, a mass percentage of the additive is 0.05% to 5%.

8. The electrochemical device according to claim 7, wherein the additive satisfies at least one of conditions (5) to (6):
(5) the unsaturated carbonate ester comprises at least one of vinylene carbonate or vinyl ethylene carbonate; or
(6) the sulfur-oxygen double bond-containing compound comprises at least one of 1,3-propane sultone, propene sultone, or vinylene sulfate.

9. The electrochemical device according to any one of claims 1 to 8, satisfying at least one of conditions (7) to (12):
(7) a peak intensity I_{A} of the first diffraction peak and a peak intensity I_{B} of the second diffraction peak satisfy: 0.05 ≤ I_{A}/I_{B} ≤ 0.25;
(8) based on a mass of the positive active material layer, a mass percentage ω_{Mn} of manganese and a mass percentage ω_{Fe} of iron satisfy: 0.05% ≤ ω_{Mn}/ω_{Fe} ≤ 25%;
(9) based on a mass of the second powder, a mass percentage ω_{M} of an element M and a mass percentage ω_{Mn} of manganese satisfy: 0.02% < ω_{M}/ω_{Mn} ≤ 3.5%;
(10) a compaction density of the positive active material layer is 2.2 g/cm³ to 2.6 g/cm³;
(11) a coating weight of the positive active material layer on a single side is 150 mg/1540.25 mm² to 450 mg/1540.25 mm²; or
(12) based on a mass of the electrolyte, a mass percentage of an additive is 0.5% to 3%.

10. An electronic device, comprising the electrochemical device according to any one of claims 1 to 9.
